# DEMANDE DE BREVET EUROPEEN

(11) **EP 1 353 459 A1**
(43) Date de publication de la demande: **15.10.2003**
(21) Numéro de dépôt: 03290906.1
(22) Date de dépôt: 11.04.2003
(51) Int. Cl.: H04B 10/155

(54) **Génération de signaux optiques**

(30) Priorité: 11.04.2002 FR 0204526
(71) Demandeur: ALCATEL, 75008 Paris (FR)
(72) Inventeur: Zami, Thierry, 91300 Massy (FR)
(74) Mandataire: Fournier, Michel

(57) **Abrégé**

La présente invention concerne un générateur (G1) d'au moins M signaux optiques porteurs de données et de longueurs d'onde porteuses sélectionnables, M étant un nombre entier supérieur à 1, comprenant N sources lasers (Sᵢ) de longueurs d'onde constantes et distinctes les unes des autres, N étant un nombre entier supérieur à 1, et un modulateur optoélectronique (Mod₁) apte à former l'un desdits M signaux optiques porteurs de données. Le générateur comprend en outre:
- M-1 autres modulateurs optoélectroniques (Mod₂ à Mod_{M}) chacun apte à former l'un desdits M-1 autres signaux optiques porteurs de données,
- un commutateur optique au moins partiellement diffusant(100) ayant N ports d'entrée (PEᵢ) connectés aux N sources lasers et M ports de sortie (PSᵢ) connectés aux M modulateurs, le commutateur optique étant apte à envoyer à une pluralité de modulateurs un signal de sortie de longueur d'onde porteuse sélectionnable pour la formation desdits M signaux.

## Description

La présente invention concerne le domaine des transmissions optiques de données et plus précisément un générateur de signaux optiques porteurs de données et de longueurs d'onde porteuses sélectionnables.

De manière connue, on cherche à accroître la capacité des systèmes optiques de transmission de données généralement sous la forme d'une modulation d'amplitude d'une onde optique porteuse. C'est pourquoi de nombreuses recherches actuelles sont destinées à mettre au point des transmissions simultanées de données destinées au plus grand nombre possible d'utilisateurs.

Le routage de données par longueur d'onde a comme avantage d'être passif par le biais de multiplexeurs en longueur d'onde. Cependant, pour bénéficier pleinement d'un tel avantage, il est utile de modifier dès que nécessaire les longueurs d'onde porteuses attribuées à chaque destinataire. Le temps de passage d'une longueur d'onde à l'autre, dit temps d'accordabilité, doit être le plus court possible.

Pour réaliser un générateur de signaux porteurs de données et sélectionnables en longueur d'onde porteuse, une solution décrite dans le document intitulé « RINGO : a WDM ring optical packet network demonstrator », R. Gaudino et autres, Th.L.2.6, ECOC'2001, Septembre 2001, consiste à employer autant de source lasers de longueurs d'onde constante que de longueurs d'onde susceptibles d'être utilisées, les sources débouchant sur un multiplexeur optique. De cette façon, le signal à la longueur d'onde choisie est injecté dans un modulateur optoélectronique formant le signal porteur de données à envoyer au destinataire associé.

Le nombre de sources lasers étant proportionnel au nombre de destinataires en jeu, un tel dispositif est onéreux, entraîne une surconsommation d'énergie, et est en outre peu intégrable dans les systèmes de transmission optique actuels tels que les noeuds de communication, de taille de plus en plus réduite, de réseaux métropolitains ou les systèmes de routage optique.

La présente invention vise à fournir un générateur de signaux optiques porteurs de données et de longueurs d'onde porteuses sélectionnables. Un tel générateur doit être d'architecture permettant son intégration dans un système de transmission optique, de prix compétitif, et présenter un temps d'accordabilité réduit.

A cet effet, la présente invention propose un générateur d'au moins M signaux optiques porteurs de données et de longueurs d'onde porteuses sélectionnables, M étant un nombre entier supérieur à 1, comprenant N sources lasers de longueurs d'onde constantes et distinctes les unes des autres, N étant un nombre entier supérieur à 1, et un modulateur optoélectronique apte à former l'un desdits M signaux optiques porteurs de données, **caractérisé** en ce qu'il comprend :
- M-1 autres modulateurs optoélectroniques, chacun apte à former l'un desdits M-1 autres signaux optiques porteurs de données,
- un commutateur optique au moins partiellement diffusant ayant N ports d'entrée couplés aux N sources lasers, et ayant M ports de sortie couplés aux M modulateurs, le commutateur optique étant apte à envoyer à une pluralité de modulateurs un même signal sélectionné parmi des signaux fournis par les sources lasers, pour la formation d'une pluralité de signaux.

Un commutateur optique au moins partiellement diffusant selon l'invention permet de connecter tout port d'entrée vers plusieurs ports de sorties. L'emploi d'un commutateur optique au moins partiellement diffusant selon l'invention permet ainsi de partager les sources lasers entre plusieurs destinataires. Le générateur selon l'invention est peu onéreux de par le nombre réduit de sources lasers nécessaires pour une accordabilité par rapport à la solution présentée ci-dessus, et de taille réduite ce qui facilite l'intégration du générateur.

De plus, l'utilisation de sources de longueurs d'onde constantes permet de contrôler aisément la valeur de chaque longueur d'onde porteuse.

Le générateur selon l'invention possède une bonne variabilité d'échelle : l'augmentation du nombre de longueurs d'onde à utiliser et/ou du nombre de destinataires n'entraîne pas de modifications majeures de l'architecture du générateur.

Dans le générateur selon l'invention, le temps d'accordabilité est déterminé à partir du temps de commutation.

Avantageusement, le commutateur au moins partiellement diffusant, dit rapide, peut présenter un temps d'accordabilité inférieur à 30 ns et de préférence de l'ordre de 10 ns.

Un commutateur rapide selon l'invention peut par exemple être à base de portes optiques réalisées selon la technologie des amplificateurs optiques à semi-conducteurs (SOA pour Semiconductor Optical Amplifier en anglais). Le fait de placer le commutateur optique selon l'invention en amont et non en aval des modulateurs permet d'éviter les problèmes connus d'inter-modulation parasite croisée qui interviennent entre signaux modulés traversant un même 'SOA' en même temps. Ces problèmes couramment désignés sous le nom de modulation de gain croisé (XGM pour 'Cross Gain Modulation' en anglais) et mélange à quatre ondes (FWM pour 'Four Wave Mixing' en anglais).

De préférence, le commutateur au moins partiellement diffusant peut comprendre :
- un étage de diffusion de MxK groupes de signaux, chaque groupe ayant N/K signaux de longueurs d'onde porteuses distinctes, l'étage comportant K moyens de couplage optique de signaux, K étant un diviseur entier de N, ayant chacun N/K entrées connectées à un ensemble distinct de N/K ports d'entrée et M sorties, chacun des moyens de couplage étant apte à envoyer un groupe vers chaque port de sortie.

Dans un mode de réalisation préféré, le commutateur optique au moins partiellement diffusant comprend en outre :
- un premier étage de sélection, apte à sélectionner M groupes parmi les MxK groupes diffusés,
- un étage de séparation, apte à séparer les N/K signaux de chacun des M groupes sélectionnés,
- un deuxième étage de sélection, apte à recevoir les signaux séparés et à sélectionner lesdits M signaux de sortie.

De préférence, le premier étage de sélection peut comporter M ensembles de K portes optiques, une porte optique par ensemble étant en position ouverte, c'est-à-dire permettant le passage d'un paquet de signaux, lors du fonctionnement du générateur.

En outre, le deuxième étage de sélection peut comporter M ensembles de N/K portes optiques, une porte optique par ensemble étant en position ouverte, lors du fonctionnement du générateur.

Les portes optiques par exemple de type SOA peuvent en outre amplifier les signaux non encore modulés. Ainsi, chaque SOA peut être saturé afin de réduire une éventuelle fluctuation de la puissance entre signaux. Cela permet une transmission de données avec un meilleur rapport signal sur bruit optique et facilite la détection des signaux par les récepteurs.

L'étage de séparation peut comporter M démultiplexeurs en longueur d'onde cycliques à réseau de guides.

Un démultiplexeur en longueur d'onde à réseau de guides(Arrayed Waveguide Grating ou AWG en anglais) est un circuit optique intégré composé de plusieurs guides d'onde parallèles et incurvés dont la différence de parcours permet de séparer à un instant donné les signaux de longueurs d'onde porteuses distinctes.

Un AWG dispose de plusieurs entrées et plusieurs sorties par exemple 5 entrées et 5 sorties. Pour une entrée donnée il se comporte comme un simple démultiplexeur en longueur d'onde.

Lorsqu'un groupe de signaux de cinq longueurs d'onde est décalé par exemple d'une entrée, par exemple injecté à l'entrée n°2 au lieu de l'entrée n°1, les cinq longueurs d'onde démultiplexées associées à chacune des cinq sorties se décalent d'autant de sorties. Suite à ce décalage, le nombre de sorties étant limité, la longueur d'onde initialement associée à la sortie n°5 de l'AWG peut ne plus être associée à une sortie. Il existe une configuration dite cyclique de l'AWG pour laquelle cette longueur d'onde se retrouve alors associée à la sortie n°1.

Dans un mode de réalisation avantageux, un générateur selon l'invention peut produire MxP signaux optiques porteurs de données et de longueurs d'onde porteuses sélectionnables, P étant un entier supérieur à 1. Dans cette optique, ce générateur comprend (P-1)xM autres modulateurs optoélectroniques, les modulateurs étant connectés par ensembles de P modulateurs à un port de sortie distinct du commutateur optique.

Dans un autre mode de réalisation avantageux, un générateur selon l'invention peut produire CxM signaux optiques porteurs de données et de longueurs d'onde porteuses sélectionnables, C étant un nombre entier supérieur à 1. Dans cette optique, ce générateur incorpore C générateurs de M signaux et comprend M commutateurs optiques ayant chacun C entrées et C sorties et étant connecté à un modulateur distinct de chaque générateur.

Ces deux dernières configurations permettent d'accroître la capacité de transmission de données, égale au produit granularité par connectivité. Dans la première configuration, la granularité, c'est-à-dire la quantité de données transmises à chaque destinataire, est augmentée ceci en augmentant le nombre de modulateurs. Dans la deuxième configuration, la connectivité, c'est-à-dire le nombre de destinataires et donc le nombre de signaux porteurs de données, est augmentée.

De préférence, chaque modulateur peut être choisi parmi les modulateurs Mach-Zehnder à niobate de lithium, les modulateurs à électro absorption et les convertisseurs tout optique.

Un mode de réalisation particulier est caractérisé en ce que le commutateur au moins partiellement diffusant comporte un étage de diffusion pour diffuser vers une pluralité de destinations chaque signal fourni par les sources lasers, indépendamment des autres signaux, suivi d'un étage de sélection comportant un commutateur spatial non diffusant.

L'invention concerne également un système de transmission de données incorporant un générateur selon l'invention tel que décrit précédemment.

A titre d'exemple, pour un système incorporant un générateur de trente-deux signaux et incluant trente-deux modulateurs de taux de modulation égal à 10 Gbit/s, la capacité de transmission est égale à 320 Gbit/s.

De préférence, le système selon l'invention peut comprendre au moins un démultiplexeur en longueur d'onde à réseau de guides, par exemple cyclique, le ou les démultiplexeurs étant aptes à séparer les signaux issus dudit générateur afin de les envoyer vers leurs destinataires respectifs.

D'autres caractéristiques et avantages de la présente invention apparaîtront dans la description suivante d'un mode de réalisation de l'invention, donné à titre illustratif et nullement limitatif.

Dans les figures suivantes :
- La figure 1 représente de façon schématique l'architecture d'un système de transmission de données comportant un générateur de signaux porteurs de données selon un premier mode de réalisation de l'invention.
- La figure 2 représente plus en détails l'architecture du commutateur du générateur de la figure 1.
- La figure 3 représente de façon schématique l'architecture d'un système de transmission de données comportant un générateur de signaux porteurs de données selon un second mode de réalisation de l'invention.
- La figure 4 représente de façon schématique l'architecture d'un système de transmission de données comportant un générateur de signaux porteurs de données selon un troisième mode de réalisation de l'invention.
- La figure 5 représente de façon schématique l'architecture d'un générateur de signaux porteurs de données selon un quatrième mode de réalisation de l'invention.

Dans toutes les figures, les éléments communs portent les mêmes numéros de référence.

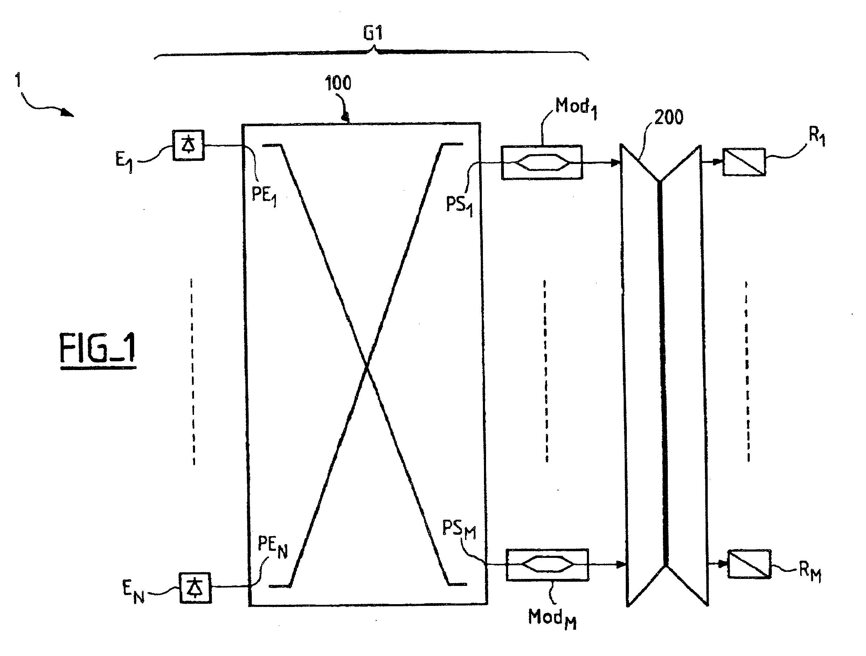

La **figure 1** représente de façon schématique l'architecture d'un système de transmission de données 1 comportant un générateur G1 de signaux porteurs de données et de longueurs d'onde porteuse sélectionnables selon un premier mode de réalisation de l'invention.

Ce générateur G1 fournit M signaux optiques, avec M>1, à un démultiplexeur en longueur d'onde cyclique à réseau de guides 200 ayant M entrées et M sorties de façon à séparer les M signaux injectés et à les diriger vers les récepteurs (Rᵢ)_{1≤i≤M} destinataires des données.

Le générateur G1 inclut des sources lasers numérotées de 1 à N (Eᵢ)_{1≤i≤N} de longueurs d'onde porteuses constantes croissantes λ_{i1≤i≤N},. Les fréquences porteuses correspondantes (fᵢ)_{1≤i≤N} sont décroissantes et régulièrement réparties sur un peigne de fréquence par exemple de pas égal à 100 GHz. Le générateur G1 inclut ensuite un commutateur optique au moins partiellement diffusant 100 dont chaque port d'entrée (PEᵢ)_{1≤i≤N} est connecté à la source laser de même numéro (Eᵢ)_{1≤i≤N} et chaque port de sortie (PSᵢ)_{1≤i≤M} est connecté à un modulateur optoélectronique (Modᵢ)_{1≤i≤M} de même numéro, par exemple de type modulateur Mach-Zehnder à niobate de lithium à 10 Gbit/s.

La capacité de transmission du système 1 est égale à 10xM Gbit/s.

Le démultiplexeur en longueur d'onde à réseau de guides 200 est cyclique pour réduire le nombre de longueurs d'onde porteuses nécessaires. Dans ce cas, il s'appuie sur la table de correspondance présentée ci-dessous qui indique, à un instant donné, pour chaque modulateur quel est la longueur d'onde porteuse à utiliser en fonction du récepteur destinataire. Pour des raisons de simplicité de présentation on choisit le cas M = N= 4.

**Table 1**

| | Mod₁ | Mod₂ | Mod₃ | Mod₄ |
|---|---|---|---|---|
| R₁ | λ₁ | λ₂ | λ₃ | λ₄ |
| R₂ | λ₂ | λ₃ | λ₄ | λ₁ |
| R₃ | λ₃ | λ₄ | λ₁ | λ₂ |
| R₄ | λ₄ | λ₁ | λ₂ | λ₃ |

A titre d'exemple, chacun des récepteurs peut ainsi recevoir à un instant donné un signal porteur de données d'une des quatre longueurs d'onde porteuses λ₁ à λ₄.

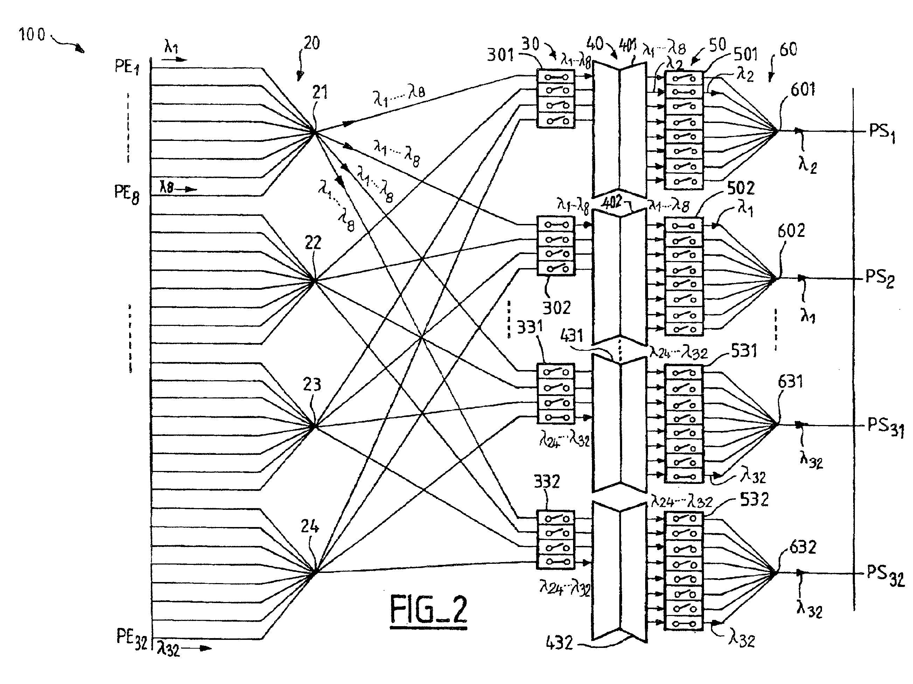

La **figure 2** représente de façon schématique l'architecture du commutateur 100. Pour des raisons de clarté, on choisit des valeurs par exemple M = N= 32.

Le commutateur 100 inclut :
- un étage de diffusion 20 de 32 x 4 groupes de signaux, chaque groupe ayant huit signaux de longueurs d'onde porteuses distinctes, multiplexés spectralement ; cet étage comportant des moyens de couplage optique de signaux 21 à 24, ayant chacun huit entrées connectées à un ensemble distinct de huit ports d'entrée contigus parmi les ports d'entrée (PEᵢ)_{1≤i≤32} et trente-deux sorties, chacun des moyens de couplage 21 à 24 étant ainsi apte à diffuser un groupe de huit signaux multiplexés spectralement vers chaque port de sortie,
- un premier étage de sélection 30, comportant trente-deux ensembles de quatre portes optiques à base de 'SOA' 301 à 332, une porte optique par ensemble étant en position ouverte lors du fonctionnement du générateur, de façon à sélectionner parmi les groupes diffusés trente-deux groupes dont certains peuvent être similaires,
- un étage de séparation 40, comportant trente-deux démultiplexeurs en longueur d'onde cycliques à réseau de guides 401 à 432 à huit entrées et huit sorties chacun, de façon à séparer les huit signaux de chacun des trente-deux groupes sélectionnés,
- un deuxième étage de sélection 50, comportant trente-deux ensembles 501 à 532 de huit portes optiques à base de 'SOA', une porte optique par ensemble étant en position ouverte lors du fonctionnement du générateur, de façon à sélectionner parmi les signaux séparés trente-deux signaux de sortie.

Chacun des trente-deux signaux de sortie est dirigé vers un port de sortie (PSᵢ)_{1≤i≤32} distinct via un étage de couplage optique 60 comportant trente-deux coupleurs 601 à 632 ayant chacun huit entrées et une sortie.

Un tel commutateur au moins partiellement diffusant à base de 'SOA' est rapide : il permet d'obtenir un temps d'accordabilité de l'ordre de 10 ns.

A titre d'exemple, les longueurs d'onde λ₁, λ₂ et λ₃₂ sont choisies à un instant donné pour quatre ports de sortie distincts. Ces choix sont représentés en figure 2 en partant de la diffusion des groupes pour λ₁, λ₂ et de la sélection de groupes diffusés pour λ₃₂.

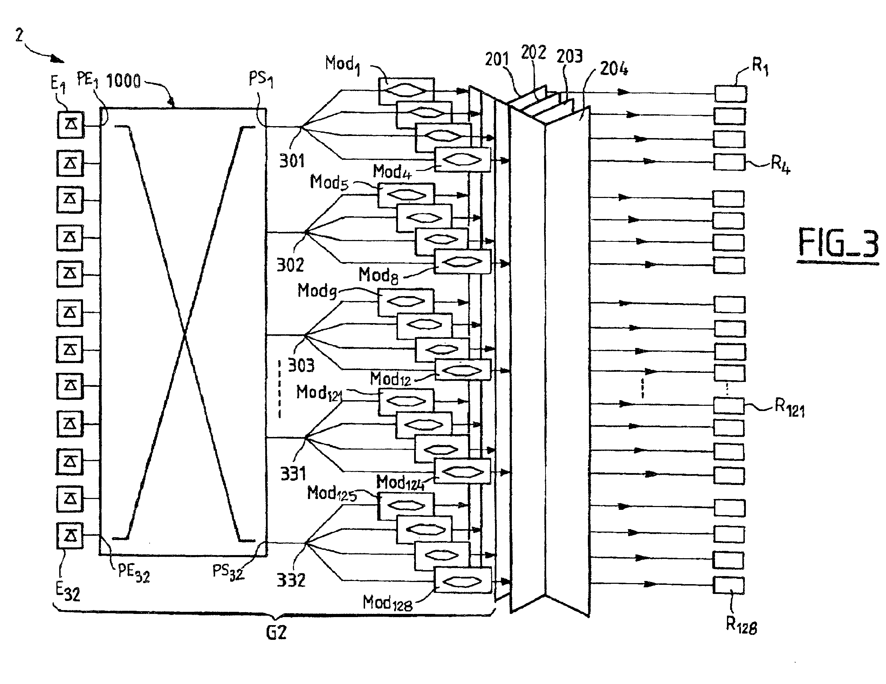

La **figure 3** représente de façon schématique l'architecture d'un système de transmission de données 2 comportant un générateur de signaux porteurs de données G2 selon un second mode de réalisation de l'invention.

Ce générateur G2 fournit trente-deux séries de signaux ayant chacune quatre signaux porteurs de données distinctes mais de longueurs d'onde porteuses identiques.

Quatre démultiplexeurs en longueur d'onde cycliques à réseau de guides 201 à 204, ayant chacun trente-deux entrées et sorties, reçoivent chacun trente-deux signaux des trente-deux séries et séparent ces derniers en les dirigeant vers une sortie distincte connectée à un récepteur (Rᵢ)_{1≤i≤128} destinataire des données. Ainsi, le ième modulateur Modᵢ est connecté au iéme récepteur Rᵢ comme suit:
- le premier modulateur Mod₁ est connecté via le premier démultiplexeur 201 au premier récepteur R₁,
- le deuxième modulateur Mod₂ est connecté via le deuxième démultiplexeur 202 au deuxième récepteur R₂,
- le troisième modulateur Mod₃ est connecté via le troisième démultiplexeur 203 au troisième récepteur R₃,
- le quatrième modulateur Mod₄ est connecté via le quatrième démultiplexeur 204 au quatrième récepteur R₄,
- le cinquième modulateur Mod₅ est connecté via le premier démultiplexeur 201 au cinquième récepteur R₅ et ainsi de suite.

Le système de transmission 2 présente une capacité de transmission de 40x32 Gbit/s à savoir 1,28 Tbit/s.

Le générateur G2 inclut des sources lasers (Eᵢ)_{1≤i≤32} de longueurs d'onde porteuses constantes distinctes (λᵢ)_{1≤i≤32}. Les fréquences porteuses correspondantes (fᵢ)_{1≤i≤32} sont décroissantes et régulièrement réparties sur un peigne de fréquence par exemple de pas égal à 100 GHz. Le générateur inclut ensuite un commutateur optique diffusant 1000 dont chaque port d'entrée (PEᵢ)_{1≤i≤32} est connecté à une source laser de même numéro (Eᵢ)_{1≤i≤32} et dont les trente-deux ports de sortie (PSᵢ)_{1≤i≤32} sont connectés à trente-deux diviseurs optiques de signaux 301 à 332 ayant chacun une entrée et quatre sorties.

Les ports de sorties du commutateur débouchent sur trente-deux ensembles de quatre modulateurs optoélectroniques (Modᵢ)_{1≤i≤128} par exemple de type modulateurs Mach-Zehnder à niobate de lithium à 10 Gbit/s connectés aux quatre démultiplexeurs en longueur d'onde à réseau de guides 201 à 204.

Le fonctionnement du commutateur 1000 est identique à celui décrit en relation avec la figure 2.

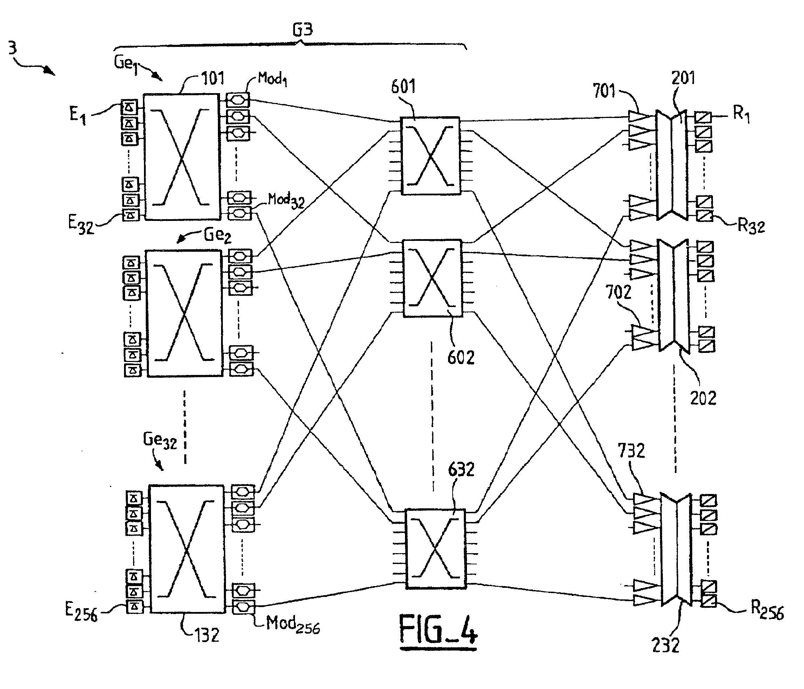

La **figure 4** représente de façon schématique l'architecture d'un système de transmission de données 3 comportant un générateur G3 de signaux porteurs de données selon un troisième mode de réalisation de l'invention.

Ce générateur G3 fournit 256 signaux optiques porteurs de données qui, après amplification dans trente-deux ensembles 701 à 732 de trente-deux amplificateurs optiques, sont injectés dans trente-deux démultiplexeurs en longueur d'onde à réseau de guides cycliques 201 à 232 ayant chacun trente-deux entrées et trente-deux sorties de façon à séparer les signaux injectés. Les signaux optiques porteurs de données sont ensuite envoyés aux récepteurs (Rᵢ)_{1≤i≤256} destinataires des données.

Le système de transmission 3 présente une capacité de transmission de 10x256 Gbit/s à savoir 2,56 Tbit/s.

Le générateur G3 inclut huit générateurs dits de premier type (Geᵢ) _{1≤i≤8} similaires à celui décrit en figure 1, avec M=N=32. Ainsi, des sources lasers (Eᵢ)_{1≤i≤256} de trente-deux longueurs d'onde porteuses constantes distinctes (λᵢ)_{1≤i≤32} et de fréquences porteuses correspondantes (fᵢ)_{1≤i≤32} régulièrement réparties sur un peigne de fréquence par exemple de pas égal à 100 GHz sont associées par série de trente-deux à un commutateur optique diffusant distinct 101 à 132. Chaque commutateur optique diffusant 101 à 132 comprend des ports d'entrée (PEᵢ)_{1≤i≤32}, et comprend des ports de sortie (PSᵢ)_{1≤i≤32} connectés à des modulateurs optoélectroniques (Modᵢ)_{1≤i≤256} par exemple de type modulateurs Mach-Zehnder à niobate de lithium à 10 Gbit/s.

Le générateur G3 inclut également des commutateurs optiques 601 à 632 ayant chacun huit entrées connectées à un modulateur distinct de chaque générateur de premier type (Geᵢ)_{1≤i≤8} et huit sorties connectées à huit amplificateurs appartenant à des ensembles distincts.

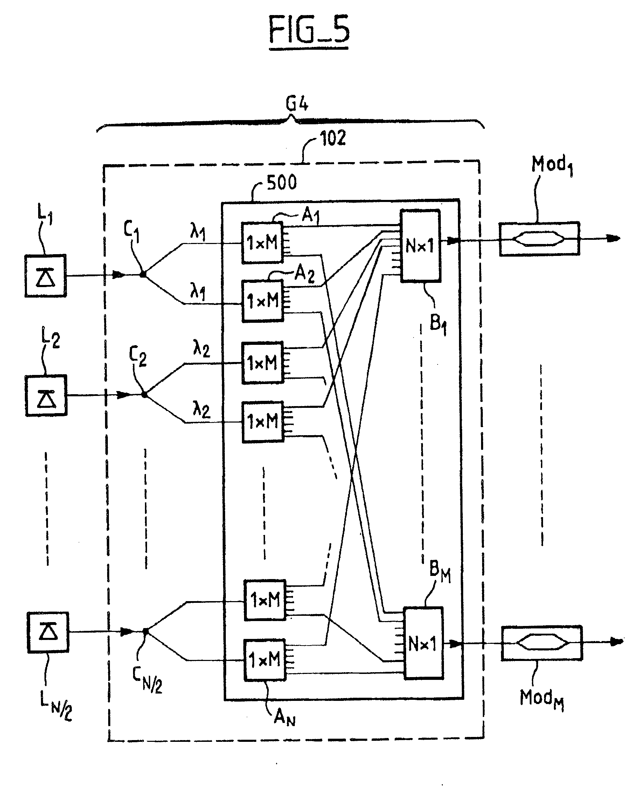

La **figure 5** représente de façon schématique l'architecture d'un générateur G4 de signaux porteurs de données selon un quatrième mode de réalisation de l'invention, comportant un commutateur à diffusion partielle limitée à deux destinations, à titre d'exemple. Un tel générateur peut être utilisé pour émettre des signaux dans deux fibres optiques. Une diffusion vers deux destinations suffit alors car on ne peut pas utiliser une même longueur d'onde plus d'une fois sur chaque fibre.

Le générateur G4 inclut des sources lasers numérotées de L₁ à L_{N/2} de longueurs d'onde porteuses constantes λᵢ avec 1≤i≤N/2. Le générateur G4 inclut en outre un commutateur optique 102, partiellement diffusant, dont chaque port d'entrée est connecté à la source laser de même numéro et chaque port de sortie est connecté à un modulateur optoélectronique (Modᵢ)_{1≤i≤M} de même numéro, par exemple de type Mach-Zehnder à niobate de lithium à 10 Gbit/s. Le commutateur 102 peut diffuser un signal optique d'un port d'entrée quelconque vers deux ports de sortie quelconques, pour réduire le nombre de longueurs d'onde porteuses nécessaires.

Le commutateur 102 comporte :
- N/2 diffuseurs C1, C2, ..., C_{N/2} ayant chacun une entrées constituant respectivement un port d'entrée du commutateur 102, et deux sorties ;
- un commutateur spatial non diffusant 500, ayant N entrées reliées respectivement aux sorties des diffuseurs C1, C2, ..., C_{N/2} , et M sorties, ces dernières constituant les ports de sortie du commutateur 102 ; ce commutateur 500 comportant :
   -- un premier étage constitué de N commutateurs spatiaux non diffusants A₁, A₂..., A_{N} ayant chacun une entrée constituant respectivement une entrée du commutateur 500, et M sorties ;
   -- un second étage constitué de M commutateurs spatiaux B₁, ..., B_{M}, ayant chacun N entrées, chaque entrée étant reliée respectivement à une sortie d'un des commutateurs A₁, A₂..., A_{N} ; et ayant une sortie unique constituant respectivement une des sorties du commutateur 500.

L'association des diffuseurs C₁, C₂, ..., C_{N/2} à deux sorties, et du commutateur spatial non diffusant 500 réalise un commutateur 102 partiellement difffusant, avec une diffusion limité à deux destinations. Considérons, par exemple, la production de deux signaux modulés ayant la longueur d'onde λ₁ respectivement sur les sorties des modulateurs Mod₁ et Mod_{M}. Une porteuse de longueur d'onde λ₁ est fournie en permanence par la source laser L₁. Le diffuseur C₁ sépare cette porteuse en deux porteuses, de longueur d'onde λ_{1,} appliquées respectivement aux commutateurs A₁ et A_{2,} et indépendamment des autres porteuses de longueurs d'onde λ2, ...,λ_{N/2}. Le commutateur A₁, par exemple, est commandé pour transmettre une porteuse vers le commutateur B1 pour atteindre le modulateur Mod1 ; alors que le commutateur A2 est commandé pour transmettre l'autre porteuse vers le commutateur B_{M} pour atteindre le modulateur Mod_{M}.

Bien entendu, l'invention n'est pas limitée aux modes de réalisation qui viennent d'être décrits. Par exemple, on pourra remplacer une pluralité de sources lasers par un laser émettant simultanément sur plusieurs longueurs d'onde, suivi d'un démultiplexeur.

Notamment, on pourra utiliser d'autres technologies concernant les portes optiques, les commutateurs et les amplificateurs.

Enfin, on pourra remplacer tout moyen par un moyen équivalent sans sortir du cadre de l'invention.

## Revendications

1. Générateur (G1, G2, G3, G4, Geᵢ) d'au moins M signaux optiques porteurs de données et ayant des longueurs d'onde porteuses sélectionnables, M étant un nombre entier supérieur à 1, comprenant N sources lasers (Sᵢ; L₁, ..., L_{N/2}) de longueurs d'onde constantes et distinctes les unes des autres, N étant un nombre entier supérieur à 1, et un modulateur optoélectronique (Mod₁) apte à former l'un desdits M signaux optiques porteurs de données ;
**caractérisé en ce qu'**il comprend :
- M-1 autres modulateurs optoélectroniques (Mod₂ à Mod_{M}) chacun apte à former l'un desdits M-1 autres signaux optiques porteurs de données,
- et un commutateur optique au moins partiellement diffusant (100, 1000, 101 à 132) ayant N ports d'entrée (PEᵢ) couplés aux N sources lasers, et ayant M ports de sortie (PSᵢ) couplés aux M modulateurs, le commutateur optique étant apte à envoyer à une pluralité de modulateurs (Mod₂ à Mod_{M}) un même signal sélectionné parmi des signaux fournis par les sources lasers, pour la formation d'une pluralité de signaux.

2. Générateur (G4) d'au moins M signaux optiques selon la revendication 1, **caractérisé en ce que** le commutateur au moins partiellement diffusant (102) comporte un étage de diffusion (C1, ..., C_{N/2}) pour diffuser vers une pluralité de destinations chaque signal fourni par les sources lasers, indépendamment des autres signaux, suivi d'un étage de sélection comportant un commutateur spatial non diffusant (500).

3. Générateur (G1) d'au moins M signaux optiques selon la revendication 1, **caractérisé en ce que** le commutateur optique au moins partiellement diffusant (100, 1000, 101 à 132) comprend :
- un étage de diffusion (20) fournissant K groupes de signaux, à partir de N signaux fournis par les N sources lasers, chaque groupe comportant M signaux identiques chacun constitué d'un multiplex spectral de N/K signaux ayant des longueurs d'onde porteuses distinctes, K étant un diviseur entier de N ;
- et des moyens de sélection à commutation spectrale (30, 40, 50).

4. Générateur (G1) d'au moins M signaux optiques selon la revendication 3 **caractérisé en ce que** les moyens de sélection à commutation spectrale (30, 40, 50) du commutateur optique au moins partiellement diffusant (100) comprennent :
- un premier étage de sélection (30), apte à sélectionner M groupes parmi les MxK groupes diffusés,
- un étage de séparation (40), apte à séparer les N/K signaux de chacun des M groupes sélectionnés,
- un deuxième étage de sélection (50), apte à recevoir les signaux séparés et à sélectionner lesdits M signaux de sortie.

5. Générateur (G1) d'au moins M signaux optiques selon la revendication 4 **caractérisé en ce que** le premier étage de sélection (30) comporte M ensembles (301 à 332) de K portes optiques, une porte optique par ensemble étant en position ouverte lors du fonctionnement du générateur, et **en ce que** le deuxième étage de sélection (50) comporte M ensembles (501 à 532) de N/K portes optiques, une porte optique par ensemble étant en position ouverte lors du fonctionnement du générateur.

6. Générateur (G1ᵢ) d'au moins M signaux optiques selon la revendication 4 **caractérisé en ce que** l'étage de séparation (40) comporte M démultiplexeurs (401 à 432) en longueur d'onde cycliques à réseau de guides.

7. Générateur (G2) d'au moins M signaux optiques selon la revendication 1 **caractérisé en ce qu'**il comprend (P-1)xM autres modulateurs optoélectroniques (Modᵢ), P étant un entier supérieur à 1, les modulateurs étant connectés par ensembles de P modulateurs à un port de sortie (PSᵢ) distinct du commutateur optique (100, 1000, 101 à 132) et étant aptes à former MxP signaux optiques porteurs de données et de longueurs d'onde porteuses sélectionnables.

8. Générateur (G3) d'au moins M signaux porteurs de données et de longueurs d'onde porteuses sélectionnables incorporant un nombre entier C supérieur à 1 de générateurs d'au moins M signaux selon la revendication 1, et **caractérisé en ce qu'**il comprend M commutateurs optiques (601 à 632) ayant chacun C entrées et C sorties et étant connecté à un modulateur (Modᵢ) distinct de chacun desdits générateurs.

9. Générateur (G1, G2, G3, Geᵢ) d'au moins M signaux optiques selon la revendication 1, **caractérisé en ce que** chaque modulateur (Modᵢ) est choisi parmi les modulateurs Mach-Zehnder à niobate de lithium, les modulateurs à électro absorbption et les convertisseurs tout optique.

10. Système de transmission de données (1, 2, 3) incorporant un générateur (G1, G2, G3, Geᵢ) selon l'une des revendications 1 à 9.

11. Système de transmission de données (1, 2, 3) selon la revendication 10 **caractérisé en ce qu'**il comprend au moins un démultiplexeur en longueur d'onde à réseau de guides (200, 201 à 232), le ou les démultiplexeurs étant aptes à séparer les signaux issus dudit générateur (G1, G2, G3).
